(19) Europäisches Patentamt
European Patent Office
Office européen des brevets

(11) **EP 1 536 659 B1**

(12) **EUROPEAN PATENT SPECIFICATION**

(45) Date of publication and mention
of the grant of the patent:
**03.01.2007 Bulletin 2007/01**

(51) Int Cl.:
**H04Q 7/38** (2006.01)

(21) Application number: **03425761.8**

(22) Date of filing: **28.11.2003**

(54) **A method of optimising exploitation of radio resources utilised during access procedures in cellular communication systems, and corresponding system**

Verfahren zum Optimieren der Nutzung von Funkressourcen während der Zugriffsprozeduren in zellularen Kommunikationssystemen, sowie entsprechendes System

Procédé pour optimiser l'utilisation des ressources radio utilisées pendant des procédures d'accès dans les systèmes de communication cellulaire, et système correspondant

(84) Designated Contracting States:
**AT BE BG CH CY CZ DE DK EE ES FI FR GB GR HU IE IT LI LU MC NL PT RO SE SI SK TR**

(43) Date of publication of application:
**01.06.2005 Bulletin 2005/22**

(73) Proprietor: **Siemens S.p.A.**
**20126 Milano (IT)**

(72) Inventor: **Montanari, Fabio**
**20080 Basiglio (MI) (IT)**

(56) References cited:
**WO-A-03/015322**          **US-A1- 2003 076 812**
**US-A1- 2003 117 980**

## Description

Field of the invention

The present invention refers to cellular communication systems, and more particularly it concerns a method of optimising exploitation of radio resources utilised during access procedures in one such system, and to the system implementing said method.

For sake of clarity, and by way of example only, the invention will be described in connection with a Time Division - Synchronous Code Division Multiple Access (TD-SCDMA) mobile communication system, but it applies to all systems in which adjacent cells contend each other the same radio resources and the common control physical channels are allocated in a substantially static manner, that is their allocation is not dynamically variable depending on the interference conditions.

Background of the invention

It is known that, in any digital mobile communication system, the radio subsystem is required to support a certain number of logical channels that can be separated into two categories: traffic channels (TCH), carrying user information, and control channels, carrying system control information (signalling, synchronisation, ...). Said logical channels are then mapped onto physical resources. The organisation of the logical channels and of the physical resources conveying them depends on the specific type of mobile system.

The present invention is concerned with the common control channels (CCCH), i. e. the control channels that are not dedicated to a specific user equipment (UE). In the application to a TD-SCDMA system described here, the logical control channels of interest are BCCH (Broadcast Control CHannel), FACH (Forward Access CHannel), RACH (Random Access CHannel) and AGCH (Access Grant CHannel). The tasks of such logical channels are well known to the skilled in the art and there is no need to disclose them in detail, which can be found e.g. in technical specification TSM 05.02 produced by the China Wireless Telecommunication Standard group (CWTS). Only, we recall that: BCCH, downlink, broadcasts general information on a base transceiver station per base transceiver station basis; FACH, downlink only, it is used to send the initial power control and synchronisation shift values to a UE; RACH, uplink only, is used to request allocation of a signalling or traffic channel; and AGCH downlink only, is used to allocate a signalling channel or directly a TCH.

The above logical channels are mapped onto the following common control physical channels (hereinafter shortly referred to as "common channels"):

- P-CCPCH (Primary - Common Control Physical CHannel), which brings BCCH and optionally AGCH: P-CCPCH shall be located on the first time slot (time slot 0) of the radio frame, where it has assigned one pre-fixed training sequence code and two pre-fixed spreading codes at spreading factor 16; a further training sequence code is reserved (always on time slot 0) in case the SCTD (Space Code Transmission Diversity) scheme is supported. The concepts of spreading code and training sequence code are well known to the skilled in the art and need not to be explained here;
- P-FACH (Physical - Forward Access CHannel): it can be freely located on any downlink time slot (but time slot 0) of the radio frame, where it can have assigned one spreading code at spreading factor either 16 or 8;
- P-RACH (Physical - Random Access CHannel): it can be freely located on any uplink time slot of the radio frame, where it can have assigned one spreading code at spreading factor either 16 or 8;
- S-CCPCH (Secondary - Common Control Physical CHannel): it brings AGCH in alternative to P-CCPCH and it can be freely located on any downlink time slot (but time slot 0) of the radio frame, where it can have assigned either two Spreading Codes at Spreading Factor 16 or one Spreading Code at Spreading Factor 8.

All common channels mentioned above are always configured on the same frequency, which is usually referred to as the BCCH frequency.

Thus, one and only one P-CCPCH can be configured within a cell and it has a pre-fixed time position in the radio frame, as well as pre-fixed training sequence code(s) and spreading codes. As a consequence, the P-CCPCH configuration is known a priori by all network elements. On the contrary, for the other common channels, besides the flexibility in the time position within the frame and in the spreading codes, also a flexibility in the number is foreseen: indeed said channels are configurable in a number ranging from a minimum, which is 1 for P-FACH and P-RACH and 0 for S-CCPCH, and a maximum which is 3 for all said channels. The following restrictions however exist:

- a one to one mapping shall hold among P-FACHs and P-RACHs, i.e. each configured P-FACH shall have associated one configured P-RACH;

- the AGCH of each configured pair P-FACH/P-RACH shall be mapped onto a configured P-CCPCH/S-CCPCH (this restriction will be clarified in the following).

The information about which P-FACHs, P-RACHs and S-CCPCHs are configured in the cell and about what P-FACH and P-RACH belong to what CCPCH is brought by BCCH.

The common channels configuration is selected at the BSC (Base Station Controller) level and is notified to BTSC (TD-SCDMA Base Transceiver Station) via a suitable system information (known as S14, defined in technical specification CWTS TSM 04.08), which is then broadcast to the UEs on BCCH. The content of the SI4 is used by the UEs during the radio link establishment phase, as detailed in the following. According to the terminology adopted in the specifications mentioned above, the set of a P-FACH/P-RACH pair and either P-CCPCH or an S-CCPCH will be referred to as a "P-FACH_GROUP".

At present, in a TD-SCDMA system the traffic channels are dynamically assigned based upon interference measurements (see for instance IT-B 1 313 314). On the contrary the common channels configuration for a given cell is selected in a fixed way by the operator and is kept unchanged over the whole life of the cell. Since each configured P-FACH_GROUP is able to allow a successful access to the cell to one UE at a time, the higher is the number of configured P-FACH_GROUPs within the cell, the lower is the probability of collision among UEs accessing the cell at the same time and the better is the capacity of the cell itself to manage the incoming traffic. As a consequence, in order to avoid that the selected common channels configuration represents a bottleneck for the system, the operator tends to configure as many P-FACH_GROUPs as possible.

Nevertheless, this precaution could prove insufficient because, due to the dynamic channel allocation (DCA) of the traffic channels typical of the TD-SCDMA systems, the availability of all configured P-FACH_GROUPs is not guaranteed at every instant.

Actually, each cell tends to use the less interfered radio channels (channel = frequency/time slot), and mutually interfering cells tend to share in a dynamic and adaptive way the available channels according to the current traffic conditions and to the cell-specific radio environment. This means that the channels involved in the fixed common channels configuration set by the operator for a given cell A can be dynamically shared with an adjacent cell B, in the sense that time periods could occur in which these channels are owned by cell B and are very interfered by the cell A. As a matter of fact, during these periods, some P-FACH_GROUPs configured in cell A are unavailable because, although they are signalled on the S14, they do not allow the UEs to access the cell due to their high interference level. Hence, during these periods, the capability of cell A to manage the incoming traffic results decreased.

Moreover, taking the above described situation to its extreme consequences, in principle time periods along which all configured P-FACH_GROUPs result unavailable in cell A can occur. In this case, the cell would become unreachable from any UE.

Consequently, all UEs located in cell A would probably attempt to access adjacent cell B and, in case of successful result, this would contribute to increase even more the interference experienced by cell A.

In this situation a feed-back effect would take place, due to which the traffic of cell B would increase more and more, to the detriment of cell A which would become more and more interfered and therefore unreachable from the UEs. Eventually, this leads to a loss of communications in the system, because at a certain moment no more resources will be available also in cell B, which will begin rejecting new access requests.

US-2003/076812 A1 discloses a method of optimising the random access procedures in CDMA cellular networks when many P-FACH_GROUPs are configured, by establishing a concatenate link between all channels involved before entering the dedicated channel, so that the choice of the synchronisation channel determines all other chanels involved in the access procedure. The problem of the interference on the radio channels conveying the P-FACH_GROUPs is not dealt with, so that a network employing the procedure of US-2003/076812 A1 still suffers from the drawback mentioned above.

The present invention just aims at overcoming this drawback.

Summary of the invention

The invention achieves that aim by providing a reconfiguration capability for the common channels, allowing the fluctuations in the radio channels sharing among adjacent cells to be followed.

More particularly, in a first aspect of the invention, there is provided a method of optimising exploitation of radio resources utilised during access phases in a cellular communication system in which adjacent cells dynamically contend each other the same resources, and, during said access phases, a bi-directional signalling exchange between terminals requesting access and control units of the cells takes place over common control physical channels (hereinafter referred to in short as "common channels"), which are at least partly allocated on radio resources also used for traffic and are arranged in one or more groups having an initial configuration corresponding to an initial allocation of radio resources established in an initialisation phase of the cell, said control units continuously monitoring the interference level of said radio resources. The method is characterised in that, during the life of the cell and based on the evolution of the interference levels of the radio resources on which said common channels are located, the groups of common channels are reconfigured in order to follow fluctuations of radio resources sharing among said adjacent cells, the reconfiguration being carried out by shifting common channels which are located on radio resources exhibiting a high level of interference to radio resources exhibiting a lower level of interference.

In a second aspect of the invention, there is provided a cellular communication system in which control units of the cells optimise exploitation of the radio resources utilised during the access phases by the above method.

Brief description of the drawings

The invention will be better understood from the following description of a preferred embodiment thereof, given by way of non-limiting example with reference to the accompanying drawings, in which:

- Fig. 1 is a schematic representation of a cell of a TD-SCDMA mobile communication system;
- Fig. 2 is a flow chart of the method of the invention;
- Figs. 3A to 3C show an example of the method of the invention; and
- Figs. 4A to 4C and 5A, 5B show two further examples of the method of the invention.

Description of the preferred embodiment

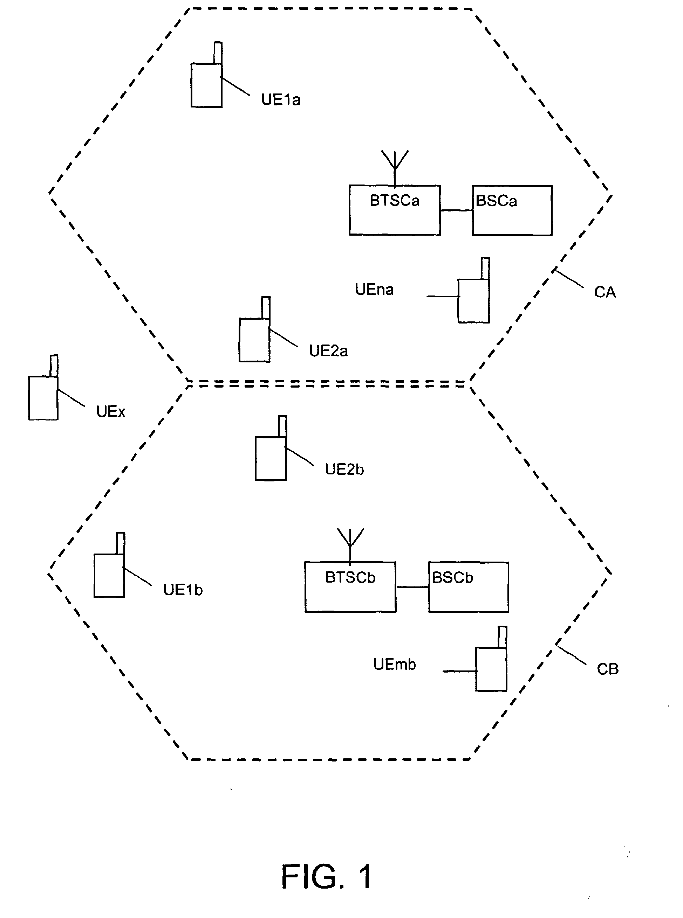

Fig. 1 schematically shows a pair of adjacent cells CA, CB of a TD-SCDMA mobile communication system, which contend each other the same radio resources. The drawing shows, for each cell, TD-SCDMA base transceiver station BTSCa, BTSCb and base station controller BSCa, BSCb. User equipments UE1a, UE2a, ..., UEna are camped on cell CA and user equipments UE1b, UE2b, ..., UEmb are camped on cell CB. User equipment UEx may be willing to request access to either cell.

For the sake of completeness, the basic TD-SCDMA physical layer aspects of interest for the invention are summarised hereinbelow, with reference to the current system release [release TD2.0 (BR7.0)]:

- FDMA, TDMA and CDMA techniques are applied in TD-SCDMA, i.e. a plurality of frequencies are available, for each frequency frames with a plurality of time slots are built, and each time slot is associated with a plurality of spreading codes SC: thus a basic radio resource unit is identified by one frequency, one time slot and one code. The common channels are transmitted at the same frequency (BCCH frequency), as said.
- TD-SCDMA is a TDD (Time Division Duplexing) system, i. e. different time slots are allotted to downlink and uplink transmission. At present, the splitting between the two directions is static and symmetrical: for each frequency: four time slots are available in downlink (TS0, TS4, TS5, TS6) and three in uplink (TS1, TS2, TS3).
- The resources belonging to the time slot TS0 of each frequency can not be assigned to any kind of traffic and support only P-CCPCH on the BCCH frequency.
- The allowed Spreading Factors for each time slot are SF16 (mandatory for time slot TS0 of the BCCH frequency) and SF8.
- Multiple Spreading Factors are not allowed in the same time slot.
- The number of Spreading Codes available in each time slot is 16 or 8 in case of Spreading Factor SF16 or SF8, respectively.

The training sequence codes or midambles associated with each time slot and used for measurements are not mentioned here, as they are not of interest for the understanding of the invention.

Taking into account that the invention aims at optimising the exploitation of the radio resources employed during the access procedure, such procedure and the involved use of the common channels are also shortly recalled.

Before sending the CHANNEL REQUEST message to access a cell, a UE shall first send on the Uplink Pilot Time Slot (UpPTS) physical channel a so called "signature" randomly selected out of a set of 8 possible signatures that can be used within the cell. This corresponds to implicitly selecting the specific P-FACH from which the UE shall expect the acknowledgement message (FACH).

In details, after sending the signature the UE shall determine which P-FACH_GROUP (G) it belongs to, by means of the following formula that discloses the implicit correspondence among signatures and P-FACHs:

$$G = S \bmod N_G \qquad\qquad (1)$$

where:

- S is the selected signature number, which can take values 0..7;
- $N_G$ is the number of configured P-FACH_GROUPs within the cell, said number, as said, ranging from 1 to 3.

From the P-FACH_GROUP, the UE can know the specific P-FACH it shall listen to and the specific P-RACH on which the CHANNEL REQUEST message shall be sent.

In details, the P-FACH_GROUP is the position (inside the SI4) of the "P-RACH & P-FACH Description" information element (IE) where the specific P-FACH and P-RACH to be used are described. The "P-RACH associated AGCH" field of the retrieved "P-RACH & P-FACH Description" IE indicates the P-CCPCH/S-CCPCH from which the UE shall expect the IMMEDIATE ASSIGNMENT or IMMEDIATE ASSIGNMENT REJECT message on AGCH. If this field assumes value 0, it indicates that the corresponding AGCH is mapped onto P-CCPCH, whereas if this field assumes value 1, 2 or 3, it indicates that the corresponding AGCH is mapped onto the first, the second or the third S-CCPCH in the list of the "S-CCPCH Description" IEs, respectively.

Summarising, if we denote by:

- $TS_{BCCH,0}$ the time slot 0,
- $TS_{BCCH,DL}$ the generic downlink time slot (different from $TS_{BCCH,0}$), and
- $TS_{BCCH,UL}$ the generic uplink time slot

of the BCCH frequency, the selected P-FACH, P-RACH and S-CCPCH configuration can be described in the most general case a combination of the following P-FACH_GROUPs:

$$G_0 = <P\text{-}FACH_0(TS_{BCCH,DL}), P\text{-}RACH_0(TS_{BCCH,UL}), CCPCH_0>$$

$$[G_1 = <P\text{-}FACH_1(TS_{BCCH,DL}), P\text{-}RACH_1(TS_{BCCH,UL}), CCPCH_1>] \qquad (2)$$

$$[G_2 = <P\text{-}FACH_2(TS_{BCCH,DL}), P\text{-}RACH_2(TS_{BCCH,UL}), CCPCH_2>]$$

where the last element of each triplet represents the P-CCPCH/S-CCPCH, which the related AGCH is mapped onto:

$$CCPCH_X = \begin{cases} P-CCPCH(TS_{BCCH,0}) & \text{if AGCH is mapped onto P} - CCPCH \\ S-CCPCH_Y(TS_{BCCH,DL}) & \text{if AGCH is mapped onto a S} - CCPCH \end{cases} \qquad (3)$$

being X and Y variable in the range 0..2 and 1..3, respectively.

The brackets in (2) indicate optional P-FACH_GROUPs (if a single P-FACH/P-RACH pair is configured, a single group is obviously required). The number of P-FACH_GROUPs actually configured in (2) corresponds to parameter $N_G$ in formula (1).

The present invention provides for an automatic reconfiguration of common channels P-FACH, P-RACH and S-CCPCH in the frame for a given cell, in order to follow the fluctuations in the sharing of radio channels among adjacent cells. Of course P-CCPCH is not involved in the reconfiguration, being its location fixed. The reconfiguration takes into account the interference measurements upon which also the dynamic allocation of the traffic channels is based.

The automatic common channels reconfiguration (ACCR) is performed by base station controller BSCa (BSCb) and is triggered whenever the interference level of one or more of the concerned channels is detected to stay over a given threshold $I_{CCH}$ (which can be an attribute configurable by the operator) for more than a given lapse of time $T_{CCh}$ (which can also be an attribute configurable by the operator). BTSC and the UEs are kept aligned with BSC by means of the S14.

As a general rule, the reconfiguration shall guarantee an efficient trade-off between the two following requirements:

- the reconfigurations should be as frequent as possible in order to follow the fluctuations of the interference level related to the channels which P-FACH, P-RACH and S-CCPCH are located on;
- each reconfiguration implies a notification from BSC to BTSC and the UEs via the SI4, and this in turn implies a transient along which the network elements are not aligned as regards the P-FACH, P-RACH and S-CCPCH configuration: both the additional signalling amount represented by such notification and the transients should be kept as low as possible and this is clearly in contrast with the first requirement.

To guarantee said trade-off and thus to reduce the unwanted effects of these transients, a reconfiguration is performed only if a predetermined time has elapsed from the preceding reconfiguration, and is performed so as to minimise the number of different P-FACH_GROUPs between two consecutive configurations. The predetermined time preferably coincides with $T_{CCh}$. Taking into account that TD-SCDMA provides for a periodic refresh of the system information every 15 minutes, $T_{CCh}$ could be of the same order of magnitude as that refresh period.

Moreover, assuming an entry P-FACH, P-RACH and S-CCPCH configuration $C_{CCh}(0)$ (whose most general description is detailed in (2) and (3)) set by the operator or defined by means of default values at an instant t = 0, the reconfiguration performed at any generic instant t shall produce a P-FACH, P-RACH and S-CCPCH configuration $C_{CCh}$ (t) with the same number of P-FACH_GROUPs as $C_{CCh}(0)$, as well as the number of P-FACH_GROUPs mapped onto a P-CCPCH/S-CCPCH in configuration $C_{CCh}(0)$ shall remain unchanged in any $C_{CCh}(t)$.

The reason of this requirement is that the calibration of the initial configuration $C_{CCh}(0)$ is supposed to be tailored to the long term traffic statistics of the cell.

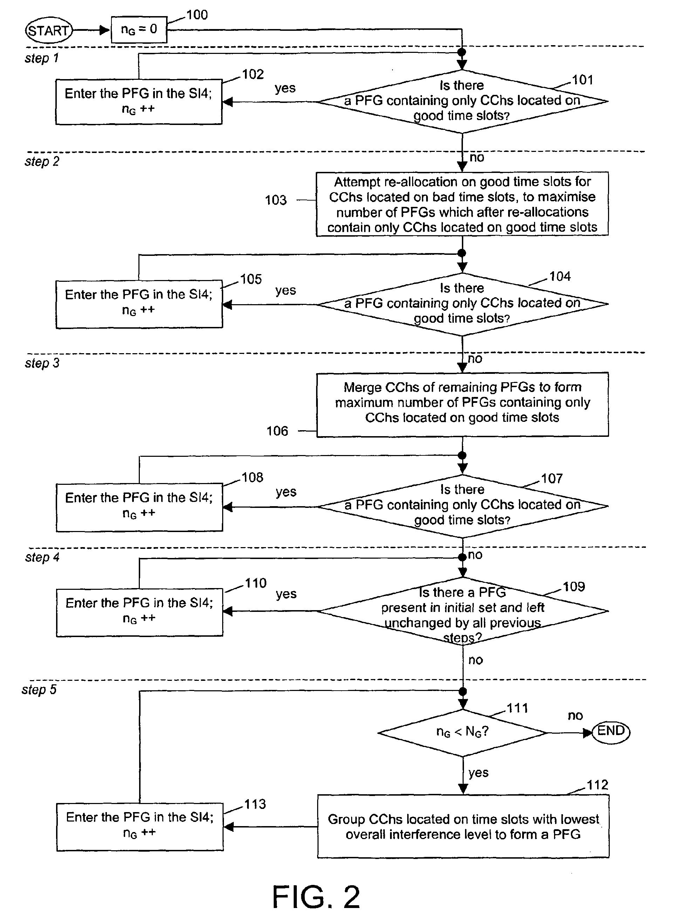

The algorithm, which is compliant with both the trade-off and the requirement mentioned above, is disclosed hereinafter with reference to Fig. 2. In the figure, abbreviations PFG and CCh denote a P-FACH_GROUP and a common channel, respectively. Moreover, in the following description, the time slots are referred to instead of channels, being all common channels configured on the BCCH frequency. Also, for sake of brevity, a generic time slot is indicated as "good" if at instant t its interference level is lower than or equal to threshold $I_{CCh}$, and "bad" otherwise. A common channel located on a good or bad time slot will be also referred to as a "good" or "bad" common channel.

Starting from instant t = 0, the interference level of the traffic channels is continuously monitored by BSC. Whenever BSC detects that the interference level of one or more of the channels involved in the entry P-FACH, P-RACH and S-CCPCH configuration $C_{CCh}(0)$ stays over threshold $I_{CCh}$ for more than $T_{CCh}$, BSC starts the ACCR and initialises a counter $n_G$ of the PFGs being built (step 100).

The ACCR substantially includes five main steps or phases.

1) The common channels located on good time slots shall be left unchanged. If the initial configuration $C_{CCh}(0)$ includes one or more PFGs where all CChs meet that condition (output YES of step 101), such PFGs are entered in the SI4 (step 102), and counter $n_G$ is correspondingly incremented (step 102). We denote by $n_{G1}$ ($0 \leq n_{G1} < N_G$) the number of PFGs retrieved in this phase.

2) If no PFG or when no further PFG is retrieved at step 101 (output NO), the PFGs containing at least a bad common channel shall be processed. For each such a bad common channel a re-allocation on a good time slot shall be attempted (step 103). The overall effect of the re-allocations performed in this step shall be the maximisation of number $n_{G2}$ [$0 \leq n_{G2} \leq (N_G - n_{G1})$] of PFGs that after the re-allocations contain only good common channels. Whenever a PFG having all common channels located on good time slots is built (output YES of step 104) in such a manner, such a PFG is entered in the SI4 and counter $n_G$ is correspondingly incremented (step 105).

3) The PFGs remaining at the end of the previous phase are of course those containing at least one bad common channel for which no re-allocation is possible. Nevertheless, these PFGs may contain also good common channels. These common channels shall be grouped in order to form $n_{G3}$ [$0 \leq n_{G3} < (N_G - n_{G1} - n_{G2})$] PFGs that contain only common channels located on good time slots (step 106). Among all the possible pairing combinations, the one that maximises $n_{G3}$ shall be selected in this step. The retrieved PFGs are entered in the SI4 and counter $n_G$ is incremented, as above (steps 107, 108).

4) The last PFGs to be entered in the SI4 will necessarily contain at least one bad common channel. In this phase, the PFGs present in the initial set of PFGs and left unchanged by all previous steps are looked for (step 109) and the $n_{G4}$ ($0 \leq n_{G4} \leq (N_G - n_{G1} - n_{G2} - n_{G3})$) thus retrieved shall be entered in the SI4 (step 110).

5) If or when step 109 gives a negative outcome, the remaining common channels (if any, positive outcome of step 111) shall be grouped in order to form the last $n_{G5}$ ($n_{G5} = N_G - n_{G1} - n_{G2} - n_{G3} - n_{G4}$) PFGs. Grouping is carried out in such a way that the first retrieved PFG shall contain the common channels located on the group of time slots with the lowest overall interference level, no matter what is the interference level of the individual time slots, and so on proceeding on a per increasing overall interference level criterion basis (steps 112, 113).

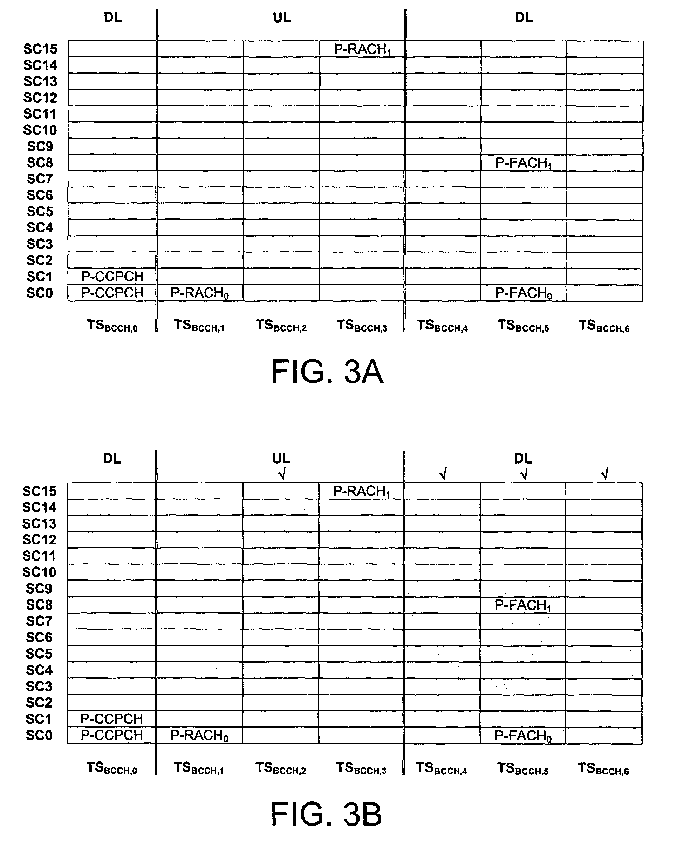

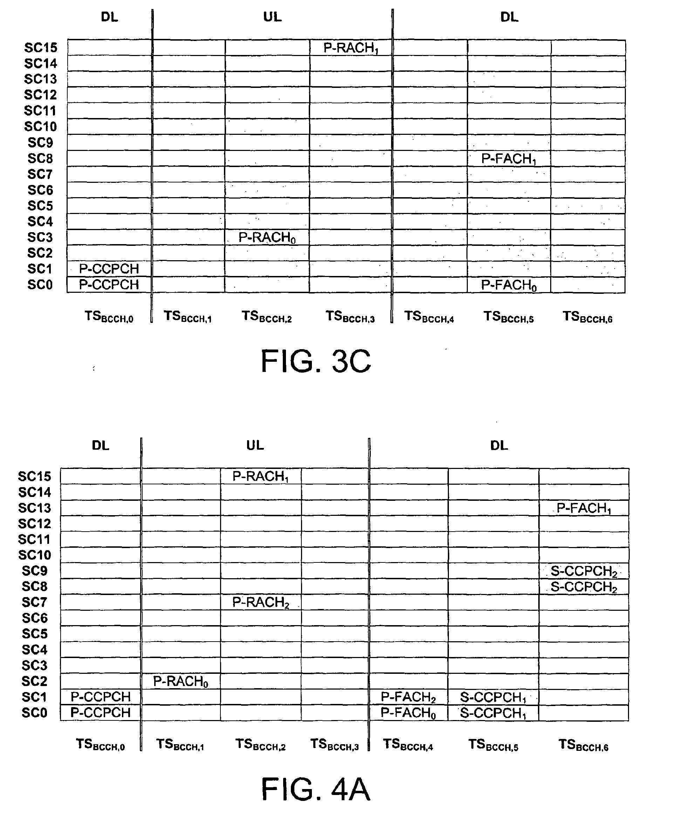

The process terminates when step 111 gives a negative outcome and will be triggered again whenever the interference conditions mentioned above occur. It is clear that, in the disclosed exemplary application to the present TD-SCDMA systems, where at most three P-FACH_GROUPs are configured, no situation can occur in which all five steps are performed. This will become apparent also from the following examples, disclosed with reference to Figs. 3 to 5. For simplicity, in the following examples all time slots $TS_{BCCH,i}$ (i = 0..6) of the frame for the BCCH frequency are supposed to be configured at spreading factor SF16, so that sixteen spreading codes (SCO, SC1, ..., SC15) are available in each time slot. Each spreading code is marked in the drawing as a white or grey box depending on whether it is idle or busy, respectively, from the traffic point of view. Symbol √ denotes a good time slot.

As a non-limiting assumption, the interference level of each time slot is supposed to be restricted in the symbolic range 0..100, with $I_{CCh}$ = 50. The interference is measured for instance as disclosed in the above-mentioned document IT-B 1 313 314.

**Example 1**

The common channels configuration $C_{CCh}(0)$ at instant t = 0 is depicted in Fig. 3A. Two P-FACHs and two P-RACHs are configured (marked with suffix 0, 1 respectively). The relevant AGCHs are assumed to be mapped onto P-CCPCH. Thus, the content of SI4 at instant t = 0 will be:

$$G_0 = <\text{P-FACH}_0(TS_{BCCH,5}), \text{P-RACH}_0(TS_{BCCH,1}), \text{P-CCPCH}(TS_{BCCH,0})>$$

$$G_1 = <\text{P-FACH}_1(TS_{BCCH,5}), \text{P-RACH}_1(TS_{BCCH,3}), \text{P-CCPCH}(TS_{BCCH,0})>$$

The conditions for the ACCR are detected at instant t ($> T_{CCh}$). It is assumed that the traffic conditions on the BCCH frequency are as shown in Fig. 3B and that the interference levels of the time slots are:

$$I(TS_{BCCH,1}) = 60 \ (> I_{CCh})$$

$$I(TS_{BCCH,2}) = 10 \ (< I_{CCh}) \qquad \sqrt{}$$

$$I(TS_{BCCH,3}) = 80 \ (> I_{CCh})$$

$$I(TS_{BCCH,4}) = 20 \ (< I_{CCh}) \qquad \sqrt{}$$

$$I(TS_{BCCH,5}) = 20 \ (< I_{CCh}) \qquad \sqrt{}$$

$$I(TS_{BCCH,6}) = 30 \ (< I_{CCh}) \qquad \sqrt{}$$

We remind that P-CCPCH cannot be re-allocated, so the algorithm only considers the P-FACHs and the P-RACHs.

No group with a good pair P-FACH/P-RACH exists, so step 1) of the algorithm is not applicable.

For both PFGs $G_0$, $G_1$, P-FACH is located on a good time slot whereas P-RACH is located on a bad time slot. A good uplink time slot with available codes exists ($TS_{BCCH,2}$). So, at step 2), one of the P-RACHs, e.g. P-RACH$_0$, is re-allocated on $TS_{BCCH,2}$, as shown in Fig. 3C. A new PFG:

$$G'_0 = <\text{P-FACH}_0(TS_{BCCH,5}), \text{P-RACH}_0(TS_{BCCH,2}), \text{P-CCPCH}(TS_{BCCH,0})>$$

is defined and entered in SI4.

Step 3) of the algorithm is again not applicable, since only PFG $G_1$ remains. $G_1$ meets the criterion of step 4 and is therefore entered into SI4 at that step. All PFGs have been thus processed, so step 5) is not applicable. The reconfiguration has ended and the contents of SI4 will be:

$$G'_0 = <\text{P-FACH}_0(TS_{BCCH,5}), \text{P-RACH}_0(TS_{BCCH,2}), \text{P-CCPCH}(TS_{BCCH,0})>$$

$$G'_1 = <P\text{-}FACH_1(TS_{BCCH,5}), P\text{-}RACH_1(TS_{BCCH,3}), P\text{-}CCPCH(TS_{BCCH,0})>$$

**Example 2**

The common channels configuration $C_{CCh}(0)$ at instant t = 0 for this example is depicted in Fig. 4A. Three P-FACH/P-RACH pairs are configured (marked with suffixes 0, 1, 2 respectively). The AGCHs for pairs 0, 1 are assumed to be mapped onto S-CCPCH$_1$ and S-CCPCH$_2$, respectively, whereas the AGCH for pair 2 is mapped onto P-CCPCH. Thus, the content of SI4 at instant t = 0 will be:

$$G_0 = <P\text{-}FACH_0(TS_{BCCH,4}), P\text{-}RACH_0(TS_{BCCH,1}), S\text{-}CCPCH_1(TS_{BCCH,5})>$$

$$G_1 = <P\text{-}FACH_1(TS_{BCCH,6}), P\text{-}RACH_1(TS_{BCCH,2}), S\text{-}CCPCH_2(TS_{BCCH,6})>$$

$$G_2 = <P\text{-}FACH_2(TS_{BCCH,4}), P\text{-}RACH_2(TS_{BCCH,2}), P\text{-}CCPCH(TS_{BCCH,0})>$$

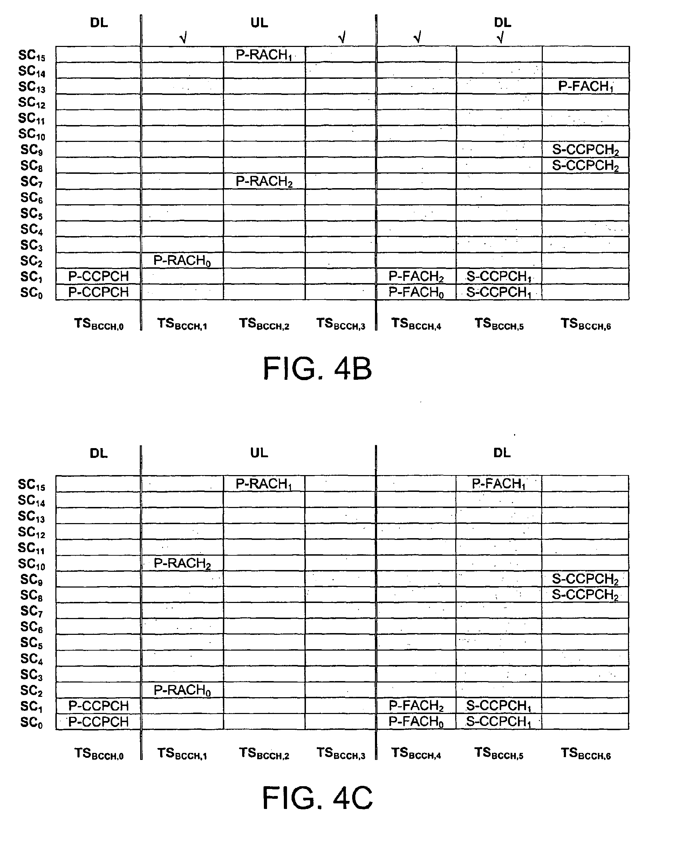

At instant t ($> T_{CCh}$), the traffic conditions on the BCCH frequency are as shown in Fig. 4B and the interference levels of the time slots are:

$$I(TS_{BCCH,1}) = 20 \ (< I_{CCh}) \qquad \sqrt{}$$

$$I(TS_{BCCH,2}) = 80 \ (> I_{CCh})$$

$$I(TS_{BCCH,3}) = 10 \ (< I_{CCh}) \qquad \sqrt{}$$

$$I(TS_{BCCH,4}) = 10 \ (< I_{CCh}) \qquad \sqrt{}$$

$$I(TS_{BCCH,5}) = 20 \ (< I_{CCh}) \qquad \sqrt{}$$

$$I(TS_{BCCH,6}) = 60 \ (> I_{CCh})$$

The first PFG $G_0$ has good P-FACH, P-RACH and S-CCPCH channels, so that at step 1) of the algorithm a first group $G'_0$:

$$G'_0 = <P\text{-}FACH_0(TS_{BCCH,4}), P\text{-}RACH_0(TS_{BCCH,1}), S\text{-}CCPCH_1(TS_{BCCH,5})>$$

identical to Go, is included into SI4.

The other groups contain at least one bad common channel (P-FACH$_1$, P-RACH$_1$, S-CCPCH$_2$ for group $G_1$, P-RACH$_2$ for group $G_2$). One downlink and one uplink time slots exist with one available code (TS$_{BCCH,5}$ and TS$_{BCCH,1}$, respectively). Thus at step 2) P-RACH$_2$ is re-allocated on TS$_{BCCH,1}$ and P-FACH$_1$ is re-allocated on TS$_{BCCH,5}$, as shown in Fig. 4C. Re-allocation concerns P-RACH$_2$ and not P-RACH$_1$ since only re-allocation of P-RACH$_2$ results in a new group $G'_1$ (comprising the common channels of original group $G_2$) whose channels are all located on good time slots. The content of SI4 thus becomes:

$$G'_0 = \text{<P-FACH}_0(TS_{BCCH,4}), \text{P-RACH}_0(TS_{BCCH,1}), \text{S-CCPCH}_1(TS_{BCCH,5})>$$

$$G'_1 = \text{<P-FACH}_2(TS_{BCCH,4}), \text{P-RACH}_2(TS_{BCCH,1}), \text{P-CCPCH}(TS_{BCCH,0})>$$

Steps 3) and 4 of the algorithm are not applicable since no unprocessed groups exist. At step 5 the last group $G'_2$ is formed with the channels of original group $G_1$. Configuration $C_{CCh}(t)$ thus becomes:

$$G'_0 = \text{<P-FACH}_0(TS_{BCCH,4}), \text{P-RACH}_0(TS_{BCCH,1}), \text{S-CCPCH}_1(TS_{BCCH,5})>$$

$$G'_1 = \text{<P-FACH}_2(TS_{BCCH,4}), \text{P-RACH}_2(TS_{BCCH,1}), \text{P-CCPCH}(TS_{BCCH,0})>$$

$$G'_2 = \text{<P-FACH}_1(TS_{BCCH,5}), \text{P-RACH}_1(TS_{BCCH,2}), \text{S-CCPCH}_2(TS_{BCCH,6})>$$

**Example 3**

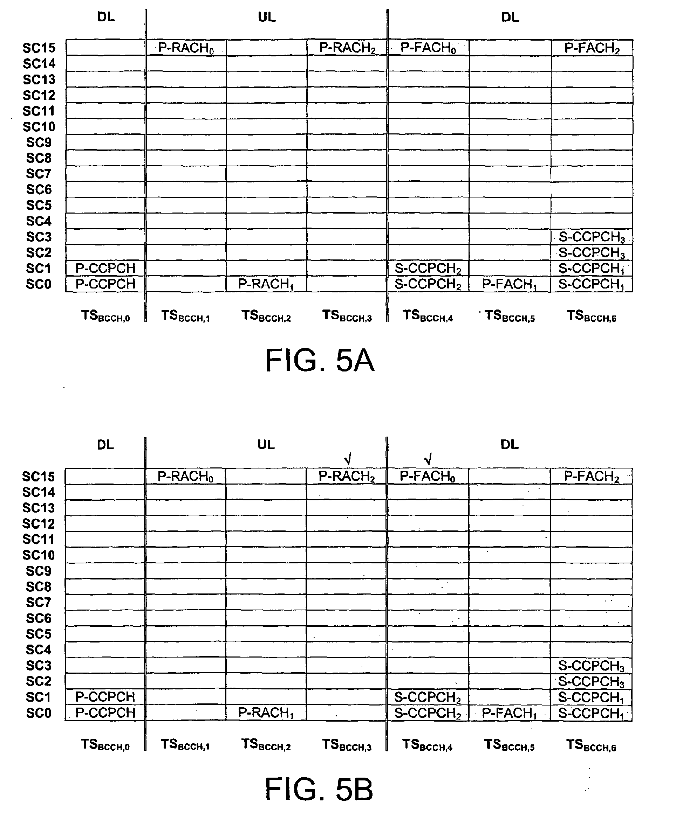

The common channels configuration $C_{CCh}(0)$ at instant $t = 0$ for this example is depicted in Fig. 5A. Three P-FACH/P-RACH pairs are configured (marked with suffixes 0, 1, 2 respectively) and the AGCHs are assumed to be mapped onto three S-CCPCHs (marked with suffixes 1, 2, 3 respectively). Thus, the content of SI4 at instant $t = 0$ will be:

$$G_0 = \text{<P-FACH}_0(TS_{BCCH,4}), \text{P-RACH}_0(TS_{BCCH,1}), \text{S-CCPCH}_1(TS_{BCCH,6})>$$

$$G_1 = \text{<P-FACH}_1(TS_{BCCH,5}), \text{P-RACH}_1(TS_{BCCH,2}), \text{S-CCPCH}_2(TS_{BCCH,4})>$$

$$G_2 = \text{<P-FACH}_2(TS_{BCCH,6}), \text{P-RACH}_2(TS_{BCCH,3}), \text{S-CCPCH}_3(TS_{BCCH,6})>$$

At instant $t$ ($> T_{CCh}$), the traffic conditions of the BCCH frequency are as shown in Fig. 5B and the interference levels of the time slots are:

$$I(TS_{BCCH,1}) = 60 \ (> I_{CCh})$$

$$I(TS_{BCCH,2}) = 70 \ (> I_{CCh})$$

$$I(TS_{BCCH,3}) = 10 \ (< I_{CCh}) \qquad \sqrt{}$$

$$I(TS_{BCCH,4}) = 50 \ (= I_{CCh}) \qquad \sqrt{}$$

$$I(TS_{BCCH,5}) = 80 \ (> I_{CCh})$$

$$I(TS_{BCCH,6}) = 90 \ (> I_{CCh})$$

Steps 1) and 2) of the algorithm are not applicable since no group containing only good channels exists and the good time slots have no available code. Thus, displacement of any bad common channel is impossible. Groups $G_0$ and $G_2$ have each a common channel located on a good time slot (P-FACH$_0$ and P-RACH$_2$ respectively): thus step 3 is applicable and a new group $G'_0$:

$$G'_0 = <P\text{-}FACH_0(TS_{BCCH,4}), P\text{-}RACH_2(TS_{BCCH,3}), S\text{-}CCPCH_2(TS_{BCCH,4})>$$

is defined and included into SI4,

Step 4) again is not applicable, since the definition of group $G'_0$ has left none of the original groups unchanged.

In step 5), two new groups $G'_1$ and $G'_2$ are prepared with the common channels not included in $G'_0$ and the content of SI4 at instant t is as follows:

$$G'_0 = <P\text{-}FACH_0(TS_{BCCH,4}), P\text{-}RACH_2(TS_{BCCH,3}), S\text{-}CCPCH_2(TS_{BCCH,4})>$$

$$G'_1 = <P\text{-}FACH_1(TS_{BCCH,5}), P\text{-}RACH_0(TS_{BCCH,1}), S\text{-}CCPCH_1(TS_{BCCH,6})>$$

$$G'_2 = <P\text{-}FACH_2(TS_{BCCH,6}), P\text{-}RACH_1(TS_{BCCH,2}), S\text{-}CCPCH_3(TS_{BCCH,6})>$$

It is immediately apparent that $G'_1$ is the combination with the lowest overall interference, and hence it is built first.

The above described exemplary embodiment of the invention has in no way limiting character and modifications and variants are possible without departing from the scope of the invention itself.

So, for instance, in Example 1, where two P-RACHs are located on a bad time slot and only one code is available in a good time slot, the displaced channel is chosen randomly. As an alternative, the P-RACH located on the time slot with the highest interference (P-RACH$_1$) might have been displaced. However, comparing the interference levels of the time slots increases the algorithm complexity. Since the tests carried out have shown that there is no significant advantage in an interference-based choice with respect to the random-choice, we prefer to adopt the solution resulting in a simpler algorithm.

The same applies to situations where a choice among the destination time slots is possible.

Moreover, time T between two subsequent reconfigurations might be different from $T_{CCh}$, so that reconfiguration could be periodically carried out irrespective of whether or not time threshold $T_{CCh}$ is exceeded. However, also this solution entails a greater algorithm complexity. So, in practice, it is preferable to have $T = T_{CCh}$ and, taking into account the interference statistics, to choose $T_{CCh}$ as a suitable trade-off among the contrasting requirements of having:

- a small $T_{CCh}$ so as to rapidly follow the interference level oscillation, this being paid by an heavier signalling on the interfaces and an increase in the periods of potential misalignment among the network elements;
- a great $T_{CCh}$ so as to have a long term evaluation of the interference level oscillation, with the advantage of lighter signalling on the interfaces and a reduction in the periods of potential misalignment among the network elements.

Moreover, as said, the above-described application of the invention to a TD-SCDMA system is obviously only a non-limiting example. The core idea of the present invention is generally optimising the exploitation of the radio resources used during the access procedures in cellular communications system in which mutually interfering cells dynamically contend the same radio resources, independently of the radio access technique, in order to avoid the risk of one of said cells becoming unreachable. The skilled in the art will have no difficulty in adapting the formulation here provided for TD-SCDMA system to other systems.

## Claims

1. A method of optimising exploitation of radio resources utilised during access phases in a cellular communication system in which adjacent cells (CA, CB) dynamically contend each other the same resources and, during an access phase, a bi-directional signalling exchange between terminals (UE1a...UEx) requesting access and control units (BSCa, BSCb) of the cells (CA, CB) takes place over common control physical channels, which are at least partly allocated on radio resources also used for traffic and are arranged in one or more groups having an initial configuration, corresponding to an initial allocation of radio resources and established in an initialisation phase of the cell (CA, CB), said control units (BSCa, BSCb) continuously monitoring the interference level of said radio resources, the method being **characterised in that**, during the life of the cell and based on the evolution of the interference levels of the radio resources on which said common control physical channels are located, the groups of common control physical channels are automatically reconfigured in order to follow fluctuations of radio resources sharing among said adjacent cells, the reconfiguration being carried out by shifting common control physical channels which are located on radio resources exhibiting a high level of interference to radio resources exhibiting a lower level of interference.

2. The method according to claim 1, wherein said reconfiguration is carried out whenever the interference of the involved radio resources stays over a given interference threshold for a time exceeding a given time threshold.

3. The method according to claim 2, wherein said thresholds are adjustable.

4. The method according to any of claims 1 to 3, wherein said reconfiguration is carried out so as to produce a configuration of the common control physical channels including the same number of groups of common control physical channels as the initial configuration.

5. The method according to any of claims 1 to 4, wherein said reconfiguration is carried out so as to minimise the differences relative to the initial configuration or an immediately preceding configuration.

6. The method according to any of claims 1 to 5, wherein said reconfiguration comprises one or more of the following steps:

a) keeping unchanged the groups wholly consisting of common control physical channels located on radio resources exhibiting an interference level below said interference threshold (101, 102);
b) for the groups comprising at least one common control physical channel located on a radio resource exhibiting an interference level above said interference threshold, attempting (103) re-allocation of said at least one common control physical channel onto a respective at least one radio resource exhibiting an interference level below said interference threshold, and including the groups resulting from a successful re-allocation into the new configuration (104, 105);
c) merging into a new group (106) common control physical channels located on radio resources exhibiting an interference level below said interference threshold and belonging to groups left unprocessed after step b), so as to build groups wholly consisting of common control physical channels located on radio resources exhibiting an interference level below said interference threshold, and including the groups so built into the new configuration (107, 108);
d) keeping unchanged the common control physical channels groups left unprocessed by steps a) to c) (109); and
e) merging the remaining common control physical channels into groups (112); the process ending when said number (Ng) of groups is attained.

7. The method according to claim 6, wherein said re-allocation (103) in step b) and said merging (106) in step c) are performed so as to maximise the number of common control physical channels groups wholly consisting of channels located on radio resources exhibiting an interference level below said interference threshold.

8. The method according to claim 6 or 7, wherein said merging (112) in step e) is performed by merging first common control physical channels resulting in a group having the lowest overall interference level, and then proceeding on a per increasing overall interference level criterion basis.

9. The method according to any preceding claim, wherein the common control physical channels involved in the reconfiguration are the physical - forward access channel P-FACH, the physical - random access channel P-RACH and the secondary - common control physical channel S-CCPCH of a Time Division - Synchronous Code Division Multiple Access cellular system.

10. A cellular communication system in which adjacent cells (CA, CB) dynamically contend each other the same radio resources, wherein, during an access phase, terminals (UE1a...UEx) requesting access and control units (BSCa, BSCb) of the cells (CA, CB) carry out a bi-directional signalling exchange over common control physical channels, which are at least partly allocated on radio resources also used for traffic and are arranged in one or more groups having an initial configuration established in an initialisation phase of the cell (CA, CB), and wherein said control units (BSCa, BSCb) include means to continuously monitor the interference level on said radio resources, the system being **characterised in that** said control units (BSCa, BSCb) also include means to automatically reconfigure, during the life of the cell (CA, CB) and based on the evolution of the interference levels of the radio resources allotted to said common control physical channels, the groups of common control physical channels in order to follow fluctuations of radio resources sharing among said adjacent cells (CA, CB), by shifting common control physical channels which are located on radio resources exhibiting a high level of interference to radio resources exhibiting a lower level of interference.

11. The system according to claim 10, **characterised in that** it is a Time Division - Synchronous Code Division Multiple Access cellular system and the common control physical channels involved in the reconfiguration are the physical - forward access channel P-FACH, the physical - random access channel P-RACH and the secondary - common control physical channel S-CCPCH.

**Patentansprüche**

1. Verfahren zum Optimieren der Nutzung von Funkressourcen während der Zugriffsphasen in zellularen Kommunikationssystemen, in denen benachbarte Zellen (CA, CB) dynamisch miteinander um dieselben Funkressourcen konkurrieren und in denen, während einer Zugriffsphase, ein bidirektionaler Signalisierungsaustausch zwischen Endgeräten (UE1a, ..., UEx), die Zugriff anfordern, und den Steuereinheiten (BSCa, BSCb) der Zellen (CA, CB) über physikalische gemeinsame Steuerkanäle erfolgt, welche zumindest teilweise Funkressourcen zugeteilt sind, die auch für Verkehrsdaten genutzt werden und die in einer oder mehreren Gruppe(n) angeordnet sind, wobei diese Gruppen eine Anfangskonfiguration aufweisen, welche einer anfänglichen Zuteilung von Funkressourcen entspricht, die in einer Initialisierungsphase der Zelle (CA, CB) vorgenommen wurde, wobei die besagten Steuereinheiten (BSCa, BSCb) fortlaufend den Störungspegel der besagten Funkressourcen überwachen, wobei das Verfahren **dadurch gekennzeichnet ist, dass** für die Lebensdauer der Zelle und basierend auf der Entwicklung der Störungspegel der Funkressourcen, auf denen sich die besagten physikalischen gemeinsamen Steuerkanäle befinden, die Gruppen mit den physikalischen gemeinsamen Steuerkanälen automatisch rekonfiguriert werden, um Schwankungen im Hinblick auf die Funkressourcen, die von den besagten benachbarten Zellen gemeinsam genutzt werden, folgen zu können, wobei diese Neukonfiguration in der Weise erfolgt, dass physikalische gemeinsame Steuerkanäle, die sich auf Funkressourcen befinden, welche einen hohen Störungspegel aufweisen, auf Funkressourcen mit einem geringeren Störungspegel verlagert werden.

2. Verfahren gemäß Anspruch 1, wobei die besagte Neukonfiguration immer dann erfolgt, wenn der Störungspegel der beteiligten Funhressourcen einen gegebenen Störungspegel-Schwellenwert überschreitet und dieser Zustand so lange andauert, dass ein gegebener Zeitschwellenwert überschritten wird.

3. Verfahren gemäß Anspruch 2, wobei die besagten Schwellenwerte angepasst werden können.

4. Verfahren gemäß einem der Ansprüche 1 bis 3, wobei die besagte Neukonfiguration erfolgt, um eine Konfiguration für die physikalischen gemeinsamen Steuerkanäle zu generieren, die dieselbe Anzahl von Gruppen physikalischer gemeinsamer Steuerkanäle umfasst wie die Anfangskonfiguration.

5. Verfahren gemäß einem der Ansprüche 1 bis 4, wobei die besagte Neukonfiguration erfolgt, um die Unterschiede gegenüber der Anfangskonfiguration oder einer unmittelbar vorangehenden Konfiguration auf ein Minimum zu reduzieren.

6. Verfahren gemäß einem der Ansprüche 1 bis 5, wobei die besagte Neukonfiguration einen oder mehrere der folgenden Schritte umfasst:

a) das unveränderte Beibehalten von allen Gruppen, die gänzlich aus physikalischen gemeinsamen Steuerkanälen bestehen, welche sich auf Funkressourcen befinden, die einen Störungspegel aufweisen, der unterhalb des besagten Störungspegel-Schwellenwerts liegt (101, 102);
b) für Gruppen, die mindestens einen physikalischen gemeinsamen Steuerkanal enthalten, der sich auf einer Funkressource befindet, welche einen Störungspegel aufweist, der den besagten Störungspegel-Schwellenwert übersteigt, der Versuch (103) einer Neuzuweisung des besagten, mindestens einen physikalischen gemeinsamen Steuerkanals auf eine entsprechende mindestens eine Funkressource mit einem Störungspegel, der unterhalb des besagten Störungspegel-Schwellenwerts liegt, und das Einfügen aller Gruppen, die sich bei erfolgreicher Neuzuweisung ergeben, in die neue Konfiguration (104, 105);

c) das Zusammenfassen zu einer neuen Gruppe (106) von physikalischen gemeinsamen Steuerkanälen, die sich auf Funkressourcen befinden, welche einen Störungspegel aufweisen, der unterhalb des besagten Störungspegel-Schwellenwerts liegt, und die zu Gruppen gehören, welche in Schritt b) unverarbeitet geblieben sind, um Gruppen zu generieren, die gänzlich aus physikalischen gemeinsamen Steuerkanälen bestehen, welche sich auf Funkressourcen befinden, die einen Störungspegel aufweisen, der unterhalb des besagten Störungspegel-Schwellenwerts liegt, und das Einfügen der so angelegten Gruppen in die neue Konfiguration (107,108);

d) das unveränderte Beibehalten von Gruppen mit physikalischen gemeinsamen Steuerkanälen, die in den Schritten a) bis c) nicht verarbeitet wurden (109); und

e) das Zusammenfassen der verbleibenden physikalischen gemeinsamen Steuerkanäle zu Gruppen (112);

wobei der Prozess endet, sobald die besagte Anzahl (Ng) von Gruppen erreicht ist.

7. Verfahren gemäß Anspruch 6, wobei die besagte Neuzuweisung (103) in Schritt b) und die besagte Zusammenfassung (106) in Schritt c) durchgeführt werden, um die Anzahl der Gruppen physikalischer gemeinsamer Steuerkanäle, die gänzlich aus physikalischen gemeinsamen Steuerkanälen bestehen, welche sich auf Funkressourcen befinden, die einen Störungspegel aufweisen, der unterhalb des besagten Störungspegel-Schwellenwerts liegt, zu maximieren.

8. Verfahren gemäß Anspruch 6 oder 7, wobei die besagte Zusammenfassung (112) in Schritt e) durchgeführt wird, indem zunächst physikalische gemeinsame Steuerkanäle so zusammengefasst werden, dass eine Gruppe entsteht, die den niedrigsten Gesamt-Störungspegel aufweist, und dies anschließend auf der Grundlage eines immer höheren Gesamt-Störungspegels fortgesetzt wird.

9. Verfahren gemäß einem beliebigen der vorstehenden Ansprüche, wobei die folgenden physikalischen gemeinsamen Steuerkanäle an der Neukonfiguration beteiligt sind: der physikalische Vorwärts-Zugriffskanal P-FACH (Physical - Forward Access Channel), der physikalische Kanal für den wahlfreien Zugriff P-RACH (Physical - Random Access Channel) und der sekundäre physikalische gemeinsame Steuerkanal S-CCPCH (Secondary - Common Control Physical Channel) eines zellularen Kommunikationssystems mit zeitgeteiltem synchronem Code-Multiplex-Vielfachzugriffsverfahren TD-SCDMA (Time Division - Synchronous Code Division Multiple Access).

10. Zellulares Kommunikationssystem, in dem benachbarte Zellen (CA, CB) dynamisch miteinander um dieselben Funkressourcen konkurrieren, wobei, während einer Zugriffsphase, Teilnehmerendgeräte (UE1a, ..., UEx), die Zugriff anfordern, und die Steuereinheiten (BSCa, BSCb) der Zellen (CA, CB) einen bidirektionalen Signalisierungsaustausch über physikalische gemeinsame Steuerkanäle vornehmen, welche zumindest teilweise Funkressourcen zugeteilt sind, die auch für Verkehrsdaten genutzt werden und die in einer oder mehreren Gruppen angeordnet sind, wobei diese Gruppen eine Anfangskonfiguration aufweisen, die in einer Initialisierungsphase der Zelle (CA, CB) eingerichtet wird, und wobei die besagten Steuereinheiten (BSCa, BSCb) über Mittel für eine ständige Überwachung des Störungspegels auf den besagten Funkressourcen verfügen, wobei das System **dadurch gekennzeichnet ist, dass** die besagten Steuereinheiten (BSCa, BSCb) ebenfalls über Mittel verfügen, die es für die Lebensdauer der Zelle (CA, CB) und basierend auf der Entwicklung der Störungspegel der Funkressourcen, die den besagten physikalischen gemeinsamen Steuerkanälen zugewiesen sind, ermöglichen, die Gruppen, welche die physikalischen gemeinsamen Steuerkanäle enthalten, automatisch zu rekonfigurieren, um Schwankungen im Hinblick auf die Funkressourcen, die von den besagten benachbarten Zellen (CA, CB) gemeinsam genutzt werden, zu folgen, indem physikalische gemeinsame Steuerkanäle, welche sich auf Funkressourcen befinden, die einen hohen Störungspegel aufweisen, auf Funkressourcen verlagert werden, die einen geringeren Störungspegel aufweisen.

11. System gemäß Anspruch 10, **dadurch gekennzeichnet, dass** es sich hierbei um ein zellulares Kommunikationssystem mit zeitgeteiltem synchronem Code-Multiplex-Vielfachzugriffsverfahren TD-SCDMA (Time Division - Synchronous Code Division Multiple Access) handelt und dass die folgenden physikalischen gemeinsamen Steuerkanäle an der Neukonfiguration beteiligt sind: der physikalische Vorwärts-Zugriffskanal P-FACH (Physical - Forward Access Channel), der physikalische Kanal für den wahlfreien Zugriff P-RACH (Physical - Random Access Channel) und der sekundäre physikalische gemeinsame Steuerkanal S-CCPCH (Secondary - Common Control Physical Channel).

**Revendications**

1. Procédé pour optimiser l'exploitation de ressources radio utilisées lors des phases d'accès dans un système de communication cellulaire dans lequel des cellules adjacentes (CA, CB) prétendent chacune dynamiquement aux mêmes ressources et, lors d'une phase d'accès, un échange de signalisation bidirectionnel entre les terminaux (UE1a ... UEx) demandant l'accès et les unités de commande (BSCa, BSCb) des cellules (CA, CB) se fait sur des canaux physiques de commande communs, qui sont au moins partiellement attribués sur des ressources radio également utilisées pour le trafic et sont agencés en un ou plusieurs groupe(s) ayant une configuration initiale, correspondant à une attribution initiale de ressources radio et établis dans une phase d'initialisation de la cellule (CA, CB), lesdites unités de commande (BSCa, BSCb) surveillant en continu le niveau d'interférence desdites ressources radio, le procédé étant **caractérisé en ce que**, pendant la durée de vie de la cellule et sur la base de l'évolution des niveaux d'interférence des ressources radio sur lesquelles lesdits canaux physiques de commande communs sont placés, les groupes de canaux physiques de commande communs sont automatiquement reconfigurés afin de suivre les fluctuations des ressources radio se partageant entre lesdites cellules adjacentes, la reconfiguration étant effectuée en décalant les canaux physiques de commande communs qui sont placés sur les ressources radio montrant un niveau d'interférence élevé sur les ressources radio montrant un niveau d'interférence plus bas.

2. Procédé selon la revendication 1, dans lequel ladite reconfiguration est effectuée à chaque fois que l'interférence des ressources radio impliquées reste au dessus d'un seuil d'interférence donné pendant un temps excédant un seuil de temps donné.

3. Procédé selon la revendication 2, dans lequel lesdits seuils sont ajustables.

4. Procédé selon l'une quelconque des revendications 1 à 3, dans lequel ladite reconfiguration est effectuée de façon à produire une configuration des canaux physiques de commande communs incluant le même nombre de groupes de canaux physiques de commande communs que la configuration initiale.

5. Procédé selon l'une quelconque des revendications 1 à 4, dans lequel ladite reconfiguration est effectuée de façon à minimiser les différences relatives à la configuration initiale ou à une configuration immédiatement précédente.

6. Procédé selon l'une quelconque des revendications 1 à 5, dans lequel ladite reconfiguration comprend une ou plusieurs des étapes suivantes :

a) maintenir inchangés les groupes consistant entièrement en les canaux physiques de commande communs situés sur les ressources radio montrant un niveau d'interférence inférieur audit seuil d'interférence (101, 102) ;
b) pour les groupes comprenant au moins un canal physique de commande commun situé sur une ressource radio montrant un niveau d'interférence supérieur audit seuil d'interférence, tenter (103) une réattribution dudit au moins un canal physique de commande commun sur au moins une ressource radio respective montrant un niveau d'interférence inférieur audit seuil d'interférence, et inclure les groupes résultant d'une réattribution réussie dans la nouvelle configuration (104, 105) ;
c) fusionner en un nouveau groupe (106) les canaux physiques de commande communs situés sur des ressources radio montrant un niveau d'interférence inférieur audit seuil d'interférence et appartenant aux groupes laissés non traités après l'étape b), de manière à construire des groupes consistant entièrement en des canaux physiques de commande communs situés sur des ressources radio montrant un niveau d'interférence inférieur audit seuil d'interférence, et inclure les groupes ainsi construits dans la nouvelle configuration (107, 108) ;
d) maintenir inchangés les groupes de canaux physiques de commande communs laissés non traités par les étapes a) à c) (109) ; et
e) fusionner les canaux physiques de commande communs restants en groupes (112) ;

le processus se terminant lorsque ledit nombre (Ng) de groupes est atteint.

7. Procédé selon la revendication 6, dans lequel ladite réattribution (103) à l'étape b) et ladite fusion (106) à l'étape c) sont effectuées de manière à maximiser le nombre de groupes de canaux physiques de commande communs consistant entièrement en des canaux situés sur des ressources radio montrant un niveau d'interférence inférieur audit seuil d'interférence.

8. Procédé selon la revendication 6 ou 7, dans lequel ladite fusion (112) à l'étape e) est effectuée en fusionnant des premiers canaux physiques de commande communs résultant en un groupe ayant le niveau d'interférence général le plus bas, et ensuite en procédant sur la base d'un critère par niveau d'interférence général croissant.

9. Procédé selon l'une quelconque des revendications précédentes, dans lequel les canaux physiques de commande communs impliqués dans la reconfiguration sont le canal d'accès vers l'avant physique P-FACH, le canal d'accès aléatoire physique P-RACH et le canal physique de commande commun secondaire S-CCPCH d'un système cellulaire à accès multiple par répartition en code synchrone et dans le temps.

10. Système de communication cellulaire dans lequel des cellules adjacentes (CA, CB) prétendent chacune dynamiquement aux mêmes ressources radio, dans lequel, pendant une phase d'accès, les terminaux (UE1a ... UEx) demandant l'accès et les unités de commande (BSCa, BSCb) des cellules (CA, CB) exécutent un échange de signalisation bidirectionnelle sur des canaux physiques de commande communs, qui sont au moins partiellement attribués sur des ressources radio également utilisées pour le trafic et sont agencés en un ou plusieurs groupe(s) ayant une configuration initiale établis dans une phase d'initialisation de la cellule (CA, CB), et dans lequel lesdites unités de commande (BSCa, BSCb) incluent un moyen pour surveiller en continu le niveau d'interférence sur lesdites ressources radio, le système étant **caractérisé en ce que** lesdites unités de commande (BSCa, BSCb) incluent également un moyen pour reconfigurer automatiquement, pendant la durée de vie de la cellule (CA, CB) et sur la base de l'évolution des niveaux d'interférence des ressources radio attribuées auxdits canaux physiques de commande communs, les groupes de canaux physiques de commande communs afin de suivre les fluctuations des ressources radio se partageant entre lesdites cellules adjacentes (CA, CB), en décalant les canaux physiques de commande communs qui sont placés sur les ressources radio montrant un niveau d'interférence élevé sur les ressources radio montrant un niveau d'interférence plus bas.

11. Système selon la revendication 10, **caractérisé en ce que** c'est un système cellulaire à accès multiple par répartition en code synchrone et dans le temps et que les canaux physiques de commande communs impliqués dans la reconfiguration sont le canal d'accès vers l'avant physique P-FACH, le canal d'accès aléatoire physique P-RACH et le canal physique de commande commun secondaire S-CCPCH.

# FIG. 1

FIG. 2

|  | DL |  | UL |  | DL |  |  |
|---|---|---|---|---|---|---|---|
| SC15 |  |  |  | $\text{P-RACH}_1$ |  |  |  |
| SC14 |  |  |  |  |  |  |  |
| SC13 |  |  |  |  |  |  |  |
| SC12 |  |  |  |  |  |  |  |
| SC11 |  |  |  |  |  |  |  |
| SC10 |  |  |  |  |  |  |  |
| SC9 |  |  |  |  |  |  |  |
| SC8 |  |  |  |  |  | $\text{P-FACH}_1$ |  |
| SC7 |  |  |  |  |  |  |  |
| SC6 |  |  |  |  |  |  |  |
| SC5 |  |  |  |  |  |  |  |
| SC4 |  |  |  |  |  |  |  |
| SC3 |  |  |  |  |  |  |  |
| SC2 |  |  |  |  |  |  |  |
| SC1 | P-CCPCH |  |  |  |  |  |  |
| SC0 | P-CCPCH | $\text{P-RACH}_0$ |  |  |  | $\text{P-FACH}_0$ |  |
|  | $\text{TS}_{\text{BCCH,0}}$ | $\text{TS}_{\text{BCCH,1}}$ | $\text{TS}_{\text{BCCH,2}}$ | $\text{TS}_{\text{BCCH,3}}$ | $\text{TS}_{\text{BCCH,4}}$ | $\text{TS}_{\text{BCCH,5}}$ | $\text{TS}_{\text{BCCH,6}}$ |

## FIG. 3A

|  | DL |  | UL $\surd$ |  | $\surd$ | DL $\surd$ | $\surd$ |
|---|---|---|---|---|---|---|---|
| SC15 |  |  |  | $\text{P-RACH}_1$ |  |  |  |
| SC14 |  |  |  |  |  |  |  |
| SC13 |  |  |  |  |  |  |  |
| SC12 |  |  |  |  |  |  |  |
| SC11 |  |  |  |  |  |  |  |
| SC10 |  |  |  |  |  |  |  |
| SC9 |  |  |  |  |  |  |  |
| SC8 |  |  |  |  |  | $\text{P-FACH}_1$ |  |
| SC7 |  |  |  |  |  |  |  |
| SC6 |  |  |  |  |  |  |  |
| SC5 |  |  |  |  |  |  |  |
| SC4 |  |  |  |  |  |  |  |
| SC3 |  |  |  |  |  |  |  |
| SC2 |  |  |  |  |  |  |  |
| SC1 | P-CCPCH |  |  |  |  |  |  |
| SC0 | P-CCPCH | $\text{P-RACH}_0$ |  |  |  | $\text{P-FACH}_0$ |  |
|  | $\text{TS}_{\text{BCCH,0}}$ | $\text{TS}_{\text{BCCH,1}}$ | $\text{TS}_{\text{BCCH,2}}$ | $\text{TS}_{\text{BCCH,3}}$ | $\text{TS}_{\text{BCCH,4}}$ | $\text{TS}_{\text{BCCH,5}}$ | $\text{TS}_{\text{BCCH,6}}$ |

## FIG. 3B

|  | DL | | UL | | DL | | |
| --- | --- | --- | --- | --- | --- | --- | --- |
| SC15 |  |  | $\text{P-RACH}_1$ |  |  |  |  |
| SC14 |  |  |  |  |  |  |  |
| SC13 |  |  |  |  |  |  |  |
| SC12 |  |  |  |  |  |  |  |
| SC11 |  |  |  |  |  |  |  |
| SC10 |  |  |  |  |  |  |  |
| SC9 |  |  |  |  |  |  |  |
| SC8 |  |  |  |  |  | $\text{P-FACH}_1$ |  |
| SC7 |  |  |  |  |  |  |  |
| SC6 |  |  |  |  |  |  |  |
| SC5 |  |  |  |  |  |  |  |
| SC4 |  |  |  |  |  |  |  |
| SC3 |  |  | $\text{P-RACH}_0$ |  |  |  |  |
| SC2 |  |  |  |  |  |  |  |
| SC1 | P-CCPCH |  |  |  |  |  |  |
| SC0 | P-CCPCH |  |  |  |  | $\text{P-FACH}_0$ |  |
|  | $\text{TS}_{\text{BCCH},0}$ | $\text{TS}_{\text{BCCH},1}$ | $\text{TS}_{\text{BCCH},2}$ | $\text{TS}_{\text{BCCH},3}$ | $\text{TS}_{\text{BCCH},4}$ | $\text{TS}_{\text{BCCH},5}$ | $\text{TS}_{\text{BCCH},6}$ |

# FIG. 3C

|  | DL | | UL | | DL | | |
| --- | --- | --- | --- | --- | --- | --- | --- |
| SC15 |  |  | $\text{P-RACH}_1$ |  |  |  |  |
| SC14 |  |  |  |  |  |  |  |
| SC13 |  |  |  |  |  |  | $\text{P-FACH}_1$ |
| SC12 |  |  |  |  |  |  |  |
| SC11 |  |  |  |  |  |  |  |
| SC10 |  |  |  |  |  |  |  |
| SC9 |  |  |  |  |  |  | $\text{S-CCPCH}_2$ |
| SC8 |  |  |  |  |  |  | $\text{S-CCPCH}_2$ |
| SC7 |  |  | $\text{P-RACH}_2$ |  |  |  |  |
| SC6 |  |  |  |  |  |  |  |
| SC5 |  |  |  |  |  |  |  |
| SC4 |  |  |  |  |  |  |  |
| SC3 |  |  |  |  |  |  |  |
| SC2 |  | $\text{P-RACH}_0$ |  |  |  |  |  |
| SC1 | P-CCPCH |  |  |  | $\text{P-FACH}_2$ | $\text{S-CCPCH}_1$ |  |
| SC0 | P-CCPCH |  |  |  | $\text{P-FACH}_0$ | $\text{S-CCPCH}_1$ |  |
|  | $\text{TS}_{\text{BCCH},0}$ | $\text{TS}_{\text{BCCH},1}$ | $\text{TS}_{\text{BCCH},2}$ | $\text{TS}_{\text{BCCH},3}$ | $\text{TS}_{\text{BCCH},4}$ | $\text{TS}_{\text{BCCH},5}$ | $\text{TS}_{\text{BCCH},6}$ |

# FIG. 4A

| | DL | | UL | | | DL | |
|---|---|---|---|---|---|---|---|
| | | √ | | √ | √ | √ | |
| SC$_{15}$ | | | P-RACH$_1$ | | | | |
| SC$_{14}$ | | | | | | | |
| SC$_{13}$ | | | | | | | P-FACH$_1$ |
| SC$_{12}$ | | | | | | | |
| SC$_{11}$ | | | | | | | |
| SC$_{10}$ | | | | | | | |
| SC$_9$ | | | | | | | S-CCPCH$_2$ |
| SC$_8$ | | | | | | | S-CCPCH$_2$ |
| SC$_7$ | | | P-RACH$_2$ | | | | |
| SC$_6$ | | | | | | | |
| SC$_5$ | | | | | | | |
| SC$_4$ | | | | | | | |
| SC$_3$ | | | | | | | |
| SC$_2$ | | P-RACH$_0$ | | | | | |
| SC$_1$ | P-CCPCH | | | | P-FACH$_2$ | S-CCPCH$_1$ | |
| SC$_0$ | P-CCPCH | | | | P-FACH$_0$ | S-CCPCH$_1$ | |
| | TS$_{BCCH,0}$ | TS$_{BCCH,1}$ | TS$_{BCCH,2}$ | TS$_{BCCH,3}$ | TS$_{BCCH,4}$ | TS$_{BCCH,5}$ | TS$_{BCCH,6}$ |

## FIG. 4B

| | DL | | UL | | | DL | |
|---|---|---|---|---|---|---|---|
| SC$_{15}$ | | | P-RACH$_1$ | | | P-FACH$_1$ | |
| SC$_{14}$ | | | | | | | |
| SC$_{13}$ | | | | | | | |
| SC$_{12}$ | | | | | | | |
| SC$_{11}$ | | | | | | | |
| SC$_{10}$ | | P-RACH$_2$ | | | | | |
| SC$_9$ | | | | | | | S-CCPCH$_2$ |
| SC$_8$ | | | | | | | S-CCPCH$_2$ |
| SC$_7$ | | | | | | | |
| SC$_6$ | | | | | | | |
| SC$_5$ | | | | | | | |
| SC$_4$ | | | | | | | |
| SC$_3$ | | | | | | | |
| SC$_2$ | | P-RACH$_0$ | | | | | |
| SC$_1$ | P-CCPCH | | | | P-FACH$_2$ | S-CCPCH$_1$ | |
| SC$_0$ | P-CCPCH | | | | P-FACH$_0$ | S-CCPCH$_1$ | |
| | TS$_{BCCH,0}$ | TS$_{BCCH,1}$ | TS$_{BCCH,2}$ | TS$_{BCCH,3}$ | TS$_{BCCH,4}$ | TS$_{BCCH,5}$ | TS$_{BCCH,6}$ |

## FIG. 4C

20

**FIG. 5A**

| | DL | UL | | | DL | | |
|---|---|---|---|---|---|---|---|
| | $TS_{BCCH,0}$ | $TS_{BCCH,1}$ | $TS_{BCCH,2}$ | $TS_{BCCH,3}$ | $TS_{BCCH,4}$ | $TS_{BCCH,5}$ | $TS_{BCCH,6}$ |
| SC15 | | $P\text{-}RACH_0$ | | $P\text{-}RACH_2$ | $P\text{-}FACH_0$ | | $P\text{-}FACH_2$ |
| SC14 | | | | | | | |
| SC13 | | | | | | | |
| SC12 | | | | | | | |
| SC11 | | | | | | | |
| SC10 | | | | | | | |
| SC9 | | | | | | | |
| SC8 | | | | | | | |
| SC7 | | | | | | | |
| SC6 | | | | | | | |
| SC5 | | | | | | | |
| SC4 | | | | | | | |
| SC3 | | | | | | | $S\text{-}CCPCH_3$ |
| SC2 | | | | | | | $S\text{-}CCPCH_3$ |
| SC1 | P-CCPCH | | | | $S\text{-}CCPCH_2$ | | $S\text{-}CCPCH_1$ |
| SC0 | P-CCPCH | | $P\text{-}RACH_1$ | | $S\text{-}CCPCH_2$ | $P\text{-}FACH_1$ | $S\text{-}CCPCH_1$ |

**FIG. 5B**

| | DL | UL | | √ | √  DL | | |
|---|---|---|---|---|---|---|---|
| | $TS_{BCCH,0}$ | $TS_{BCCH,1}$ | $TS_{BCCH,2}$ | $TS_{BCCH,3}$ | $TS_{BCCH,4}$ | $TS_{BCCH,5}$ | $TS_{BCCH,6}$ |
| SC15 | | $P\text{-}RACH_0$ | | $P\text{-}RACH_2$ | $P\text{-}FACH_0$ | | $P\text{-}FACH_2$ |
| SC14 | | | | | | | |
| SC13 | | | | | | | |
| SC12 | | | | | | | |
| SC11 | | | | | | | |
| SC10 | | | | | | | |
| SC9 | | | | | | | |
| SC8 | | | | | | | |
| SC7 | | | | | | | |
| SC6 | | | | | | | |
| SC5 | | | | | | | |
| SC4 | | | | | | | |
| SC3 | | | | | | | $S\text{-}CCPCH_3$ |
| SC2 | | | | | | | $S\text{-}CCPCH_3$ |
| SC1 | P-CCPCH | | | | $S\text{-}CCPCH_2$ | | $S\text{-}CCPCH_1$ |
| SC0 | P-CCPCH | | $P\text{-}RACH_1$ | | $S\text{-}CCPCH_2$ | $P\text{-}FACH_1$ | $S\text{-}CCPCH_1$ |